Europäisches Patentamt

(19) **European Patent Office**

Office européen des brevets

(11) Publication number: **0 088 362**
A1

## (12) EUROPEAN PATENT APPLICATION

(21) Application number: **83102062.3**

(22) Date of filing: **03.03.83**

(51) Int. Cl.³: **G 01 L 11/00**

(30) Priority: **08.03.82 US 355705**

(43) Date of publication of application: **14.09.83**
Bulletin 83/37

(84) Designated Contracting States: **AT BE CH DE FR GB IT LI LU NL SE**

(71) Applicant: **Fearon Development Corporation, 410 Mansion House Center, St. Louis Missouri 63102 (US)**

(72) Inventor: **Fearon, Robert Earl, 5246 South 76th East Avenue, Tulsa Oklahoma 74145 (US)**

(74) Representative: **UEXKÜLL & STOLBERG Patentanwälte, Beselerstrasse 4, D-2000 Hamburg 52 (DE)**

(54) **Nonintrusive pressure measurement.**

(57) Pressure within a cylindrical shell (10) is measured by generating acoustic waves in the shell in a manner which minimizes the propagation of any appreciable vibrational energy to its mechanical supports. The mode of the generated vibration is chosen from among the banded resonance vibrations which can be generated in a cylindrical shell (10), the chosen banded resonance having an even number of longitudinally extending nodes parallel to the portion of the shell within which the vibration exists. Stress variation in the cylindrical shell due to the contained pressure causes a change in the banded resonant frequency which is monitored as a measure of the pressure.

EP 0 088 362 A1

ACTORUM AG

COMPLETE DOCUMENT

0088362

## TECHNICAL FIELD

This invention relates to nonintrusive pressure measurements, and more particularly to nonintrusive measurements where the determination of pressure within a cylindrical shell is made in response to the variation of the resonant frequency of banded vibrations so arranged that a negligible amount of energy of the vibration is transferred to the mechanical supports of the cylindrical shell.

## BACKGROUND OF THE INVENTION

Pressure measurement gauges of the prior art fall chiefly into two broad categories. In one of these the pressure is measured by the response of a pressure containing means having a peculiar shape, the shape being such that increasing pressure changes it. Such peculiar shape gauges comprise within their category all Bourdon tube type devices containing flattened or ovalized tubing which change shape in response to pressure. The measurement of the pressure is an indirect result of the change in shape of the deformed tube, and is mechanically indicated, responsive to that effect. Another subcategory within the list of gauges of peculiar shapes include diaphragm gauges such as the aneroid barometer. A second broad category of pressure gauge devices comprises instruments in which by one method or another sonic wave energy or other radiation enters the interior of the pressure containing vessel and passes through the contained medium, of which the pressure is being measured. Effects which result as a consequence of the radiation passing through the contained medium are dependent upon the pressure of the medium. Such effects are measured as an indication of the pressure.

A category of pressure measuring devices which does not neatly fall into either of the above two broad categories is the class of manometers. In these devices the confined pressure does not penetrate through the liquid contained within the manometer. The movement of the liquid represents a small change in the volume of the pressure containing system. The small volume change is indicated by movement of the liquid level in the tubing of the manometer which serves as an indication of the pressure.

There is one common factor in all the pressure measuring devices of the background art discussed above. The common factor, which is a disadvantage, is that the measurements reported by such devices are analog in form. For the transmission and processing of data in modern process control systems information is usually required in digital form rather than analog form. To overcome this deficiency of pressure gauges of the prior art, there is required an analog-to-digital (A-to-D) conversion of the information. Such conversion is required before the results obtained by such gauges can be employed in modern data processing systems. The A to D conversion is an inconvenient step, causing a certainty of some added degree of error.

A third class of pressure gauges broadly different from all those of the background art is illustrated and described by G. Arvidson (U.S. Patent No. 3,021,711, issued February 20, 1962). In the patent to Arvidson, a resonant mechanical frequency is excited and the frequency measurement of the resonance gives the data indicating the pressure. In Arvidson's device the vibration corresponding with the resonance exists in a cylindrical shell or a portion thereof and has straight nodes parallel to the axis of the shell, even in number.

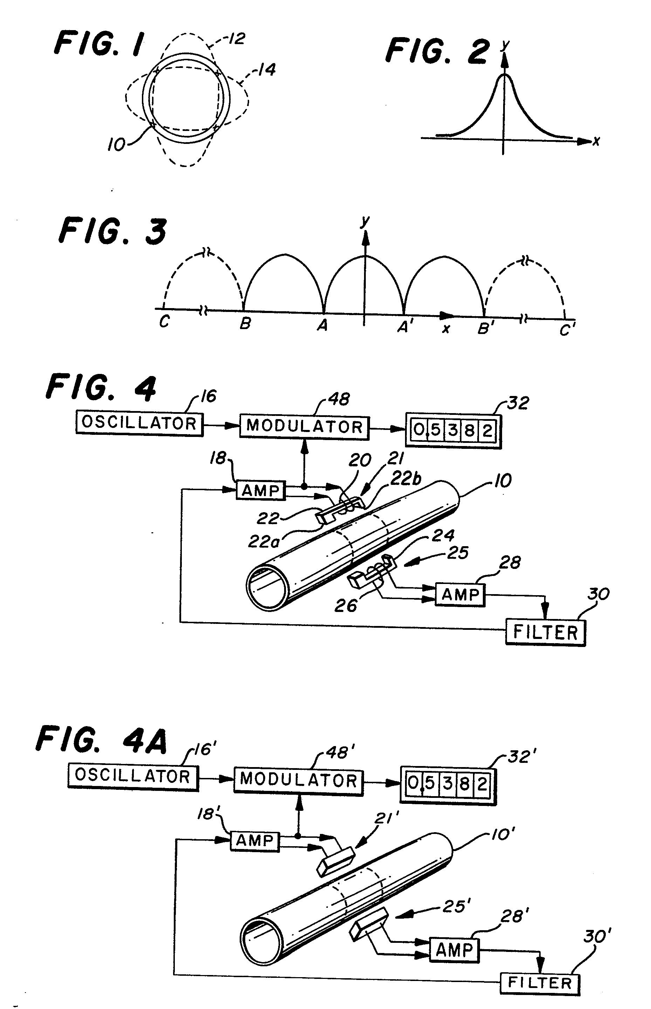

Arvidson has assumed that if he provides substantial support at a place where a ring-shaped node would otherwise be, the ring-shaped node continues to exist at the supposed location. Such is not the case. Ring-shaped nodes locate themselves on a pipe on the basis that the mechanical coupling on both sides of the node is to more pipe of the same grade. Although, in a ring-shaped node there cannot be found any component of radial particle movement, the ring-shaped node is nevertheless a region of substantial energy transfer. It is possible to produce a node by clamping, as Arvidson has pictured in his Figure 1; however the movement and the stress distribution near the node so produced is not at all what it would be in the case of a similarly pictured node occuring on a long pipe. Generally, a ring-shaped node on a long pipe is not a concentration of stress. Clamping, or connection to a massive end member as illustrated by Arvidson, creates a situation at which the stress in the close vicinity of the heavy support is conspicuous, and tends to induce substantial elastic losses of the vibration process. Also, the reaction of the vibrating cylindrical shell upon the supports is only symmetrical if everything about the supporting members is completely symmetrical, and otherwise reactions are induced upon the end members, which, reacting upon their mechanical supports, dissipate energy very much in the sense that a tuning fork base dissipates energy. Symmetrical support still leaves the massive ends undergoing endwise motion at twice the frequency of the oscillatory process in the cylindrical shell. This endwise motion causes a net movement of the center of gravity of the whole system, again inducing losses by propagation of energy to whatever supports Arvidson's device.

By contrast, in the present invention endwise effects are very equal for the reason of the use of an extended pipe. The endwise reactions in the extended portions merely propagate equal waves, with particle movement precisely opposing in the endwise component, and cause no net disturbance of the center of gravity of the mechanical system. Also, in accordance with the present invention, no circular nodes appear on the cylindrical shell involved in the vibration.

The mechanical frequency of a banded resonance is substantially the same as the frequency which would be calculated

0088362

on the supposition that the cylindrical shell is infinitely long and has straight nodes extending parallel to the axis throughout its entire length. Frequencies which have been measured agree with the mathematical computation for the infinite cylindrical shell within the limits of error of the data. Arvidson's vibrational system, on the contrary, exhibits a higher frequency, and the frequency is dependent upon the length of the cylindrical shell which is provided, as measured between the base plate and the top closure. In the system of the present invention, the vibrational energy does not proceed appreciably to the ends of the cylinder, but falls off exponentially to negligible values at an axial distance of several diameters of the shell from the band or zone on the shell where the vibration is most intense.

A general principle of the measurement of the frequency of a resonant vibration is that the product of the band width of the response curve of the resonant system and the transient time for the vibration to fall off to an arbitrary fraction of its intensity (such as 1/2 of the initial amplitude) is a constant. That is the sharpness with which the resonance is defined is proportional to the transient time, the longer the transient time, the better the resonance is defined in terms of frequency. A long transient time prevails when there is very little dissipation of the mechanical energy of the vibration, hence there is an interest in the matter of nondissipative arrangements to avoid loss of energy of the vibrations. As a consequence of the better conservation of energy in the device of the present invention, there is achieved frequency measurement of greater exactness and correspondingly, more exact pressure measurement. In many instances the advantage of more precise measurement is a near necessity. The whole purpose of some processes which are dependent on controlling pressures and temperatures fails to be achieved whenever the pressure or temperature measurement is not sufficiently precise.

Also in the art of pressure measurement there has been emphasis in the past on systems that sense changes, or the onset of a change. It is an advantage in all such systems if the determination of pressure is as accurate as possible. Otherwise small differences which exist may prove entirely fictitious, and real differences are overshadowed by accidental error, or cannot be observed at all. For example, to conserve energy in a temperature control system, the application of heat or cooling is more efficient if it is applied as the temperature commences to fall or rise, as the case may be. Systems which utilize conventional measurement, responding merely to temperature limits, generate higher peak loads on the cooling and heating systems. Temperature measurements are relevant to the present invention for the reason that temperature may be measured employing a confined gas volume, and measuring the gas pressure. Accordingly any temperature measurement may be styled as a pressure measurement. Hitherto, this variant of temperature and pressure interconvertability has not been available for practical use to any great extent, very largely because of the inexactness of the needed pressure measurements.

## DISCLOSURE OF THE INVENTION

The present invention includes apparatus and the method for nonintrusive measuring of pressure within a body having at least one closed acoustic path, where the body has length normal to the path. The apparatus includes an energizing transducer mounted adjacent the body and connected to a controllable frequency source. Energizing the transducer establishes acoustic vibrations within the body along the acoustic path. An electromagnetic movement detector is mounted adjacent to the body for detecting movements from forced vibrations caused by the energizing transducer. By means to be described, the detecting means and its connected observational system enables the operator to recognize the condition when the forced vibrations correspond with a banded vibration standing wave resonance, the frequency of which resonance varies with the stress changes within the body.

In accordance with the present invention, there is provided apparatus and a method for producing and controlling a pattern of acoustic vibrations, called banded vibration, in a sound conducting body which has at least one acoustic ray path closed upon itself and has a length normal to the direction of the path. An acoustic path which is closed upon itself is defined as a path for a wave which returns the wave back to the point of origin without substantial loss of vibrational energy. Stresses are applied to the body in at least one region along the path, the stress being applied at a frequency corresponding with at least one resonant band vibration exhibiting standing waves having nodes parallel to the axis of the pipe, angularly spaced evenly about the perimeter of the pipe, the said nodes being of an even number. The resonance frequency of the said banded vibration varies with stress within the body as caused by changes of pressure on its wall.

In accordance with the present invention there is provided a method and apparatus for contactless nonintrusive pressure measurement. The method and apparatus utilizes the influence of the pressure upon the wall of the pipe which increases the barrel hoop tension in the wall and increases, in a corresponding manner, the frequency of any resonant vibration in which, as a consequence of the vibration, falling in the class of antisymmetric Rayleigh wave systems as defined in Viktorov's "RAYLEIGH AND LAMB WAVES" (Plenum Press, New York, 1967) pages 67 to 70, through Article 1, and especially as set out in part a of Figure 30. The same type of standing wave vibrations also are described in A.E.H. Love's text on mathematical theory of elasticity and are described therein as containing flexural waves in a pipe wall. Particular interest attaches to the category of standing wave generated in a pipe in which there are four (4) nodes and antinodes, evenly spaced around the pipe extending parallel to the axis. In the spirit of this invention, emphasis is especially directed to the banded resonance in which the energy of such a standing wave system is concentrated substantially in a limited lengthwise region of the pipe, vanishing to negligible values outside the lengthwise region where the energy is concentrated.

The nodes of this system are parallel to the axis of the pipe, straight, and four in number. Although inward and outward excursions of the radius of the pipe do not occur at the nodes, slight tangential movement is particularly featured, and is at a maximum at the identified nodes. The tangential movement which occurs at the nodes takes place in opposing directions on the inner surface and on the outer surface of the cylindrical shell. At the median plane of the shell there is no tangential movement, but instead a minute cyclically reversing rotation is a feature. In accord with the foregoing statement, the particle existing at a node and on a median plane on the section rotates very slightly, alternately clockwise and counterclockwise, as the standing wave passes through the phases of its evolvement.

In accordance with the present invention for nonintrusive pressure measurement, the cylindrical shell is excited and vibrated in a limited region of length only, the length which is substantially moving being equal to approximately twice the diameter of the shell measured at the median plane. Outside the region in which the vibrational movement is substantially confined, the vibration continues and the nodes also continue straight and on the extensions of the same lines as those representing nodes within the zone where the energy is the greatest. In the region outside the principle residence of the energy of vibration, and proceeding parallel to the axis of the pipe away from the center of the maximum energy of vibration, measurements of amplitude at successive equal intervals of distance give a geometric progression, the amplitude diminishing by an equal ratio as each such element of length is passed.

In accordance with the invention, there is presented to the outside of the cylindrical shell a localized electromagnetic field arranged to vary with respect to time, the time variations inducing flexural waves in the walls of the shell. Because of the influence of Foucault electric currents, a varying electromagnetic field delivers mechanical forces which also vary with time to any cylindrical shell in which the material of the shell is electrically conductive. In a broader sense, varying electromagnetic fields also act upon all materials which have a dielectric constant different from free space. As a consequence of these propositions, methods of mechanical driving suitable to driving a resonant vibration in any kind of elastic solid shell are practical, including, but not limited to, glass, quartz (including fused quartz), including Verneiul's process alpha alumina crystals (artificial sapphire). Of course, ferro-electric materials such as barium titanate, which have enormous dielectric constants, can be driven by electromagnetic noncontact driving means.

In all instances of cylindrical shells driven by an external electromagnetic exciter, the resonant frequency may readily be determined. The determination of the resonant frequency is easily achieved in any of several ways. One way that has been found satisfactory is to deliver a powerful sudden electromagnetic impulse and observe the transient motion of the pipe responsive to the sudden impulse. The longest lasting portion of such a transient is always the zone-confined vibration (banded vibration) of the flexural variety. The member which persists the longest of the whole group of such vibrations is always the banded flexural vibration having four straight nodes and antinodes. Experiments done on oxygen cylinders have clearly confirmed this proposition.

A second more sophisticated technique for determining resonant frequency of a flexural vibration in a cylindrical shell (pipe) consists in energizing an electromagnetic driving means by energy which varies its frequency in a smooth cyclical schedule with respect to time. The operator uses a source of electromagnetic energy in the form of a function generator (oscillator) of variable frequency control. In a simple test of resonant frequency the operator positions an electromagnetic driving means at a location not too distant from the outside of the cylindrical shell, and varies the frequency throughout the audio frequency range. When there is detected a large increase in sound of the frequency corresponding with the setting of the oscillator, the adjustment which produces the maximum of the intensity of sound is noted. The frequency being produced by the oscillator, and corresponding with this adjustment, is the resonant frequency of the cylindrical shell.

A third, still more sophisticated technique, is one which does not require any adjustments to be made manually, nor does it require that the vibration be in the acoustical range of human hearing. In this third method, a scanning process progresses through a chosen frequency range automatically, imposing the automatic control on a suitable oscillator. A low frequency generator of a sawtooth-shaped electrical wave delivers an output to a voltage controlled oscillator (VCO) in one form of such a frequency scanning arrangement. The impedance of the electromagnetic driver, plotted with respect to frequency, exhibits a quick upward excursion, a quick downward excursion, and a point of inflection when passing through the frequency range very close to a resonance in the cylindrical shell being driven. This feature, which identifies the value of the frequency of the resonance, may be displayed graphically by delivering an input of the sawtooth wave generator to the horizontal axis of a cathode ray oscilloscope and at the same time energizing the vertical axis of the oscilloscope by a separate signal derived from a small valued resistor in series with the electromagnetic driver.

A still further very convenient method of measuring the resonant frequency of pipe comprises the employment of more than one driver. One of the drivers is isolated from the other driver, the two being on opposite ends of extensions of a diameter of the pipe. Shielding may be interposed to prevent the one driver acting upon the other except through the pipe. Driver number one is connected to the output of a high gain electric amplifier. Driver number two works in reverse, not as a driver, but as a receiver or sensor of movement of the pipe, converting a small amount of the energy derived from any movement into a cyclical electrical wave on its terminals. The electric wave so produced is delivered to the input of the same amplifier that drives the first driver with its output. Such an arrangement oscillates as a consequence of positive feedback, but only at a resonant frequency of the pipe, for the reason that the attenuation of all frequencies distant from resonances is enormously greater in passing through the driver-to-pipe-to-driver portion of the arrangement. The operator selects the particular resonance to be measured in this system by using a wave filter to reject the frequencies of all resonances other than the one to be observed. In this fourth arrangement, the output is connected directly to an events per unit time digital frequency meter, the data of which goes into an appropriate data process to deliver a numerical indication of the pressure.

In the use of the present invention and as a part of it, there is a further improvement over prior art relating to driving a cylindrical shell at a resonance. To understand the improvement and the need for it, it is helpful to first point out a problem which occurs. In driving by means of a feedback loop, and in driving when a sending and receiving transducer acts upon a pipe as part of the loop, high frequencies present a peculiar difficulty. All transducers which radiate energy to the pipe or receive a radiated effect from it necessarily radiate energy into space generally, and are sensitive and receive radiant energy from anywhere in space, not limited to the pipe alone. As a consequence, energy may be conveyed through space from a transmitting or actuating (driving) transducer to a receiving transducer whether the pipe is present or not. This transmission of a signal by a channel which is not desired is known as "cross talk". Cross talk is a conspicuous difficulty in feedback systems as the frequency rises. In experiments carried out on ten inch steel pipes with a receiver and sender situated inside a pipe, cross talk became conspicuously troublesome at 100 kilohertz. In the case of the ten inch pipe, the cross talk problem was eliminated by devising a driver to act upon the pipe mechanically at twice the frequency of oscillation of the voltage input to the driver. In effect, the input to the driver acts upon the pipe in a manner in which a modulation product is formed, making a summation tone of the driving frequency with itself. Drivers are well known which can produce summation tone effects or difference tone effects in which the frequencies involved are distinct and separate, and arbitrarily chosen. The use of arbitrarily chosen distinct frequencies is an improvement over the second harmonic driving technique in that, in the former system, it was necessary to provide a reasonably good wave form to the driver from the driving oscillator. Some wave forms, which included second harmonic, produced the cross talk problem.

In the separate and distinct frequency modulation approach, the wave form of the chosen frequencies does not have the same adverse effect, since none of the harmonics of the separate frequencies are equal to the summation or difference tone being produced in the mechanical oscillation. It is a further advantage that the method involved is reversible. Detection of movement can be done using the movement of the driven mechanical entity (the cylindrical shell) to modulate or interact with a signal comprised of an arbitrarily chosen frequency imposed on the receiving transducer.

Driving glass is difficult at audio frequencies by the use of conventional transducers of the prior art. Glass is driven by imposing upon it waves in the range of 10 megahertz. As an example, the radio frequency waves may be chosen to have a difference of 500 hertz. In such a case the glass will be energized at 500 hertz, in the audio range. A tuned receiving arrangement to detect the movement of the glass requires a third oscillator to energize the receiving transducer. The movement of the glass produces a 500 hertz modulation upon the frequency imposed in the receiving transducer. Without the use of the modulation product technique of driving and receiving, energizing tubular materials such as glass or quartz is somewhat difficult. With the use of such techniques, the energizing of glass or quartz is not difficult. This feature of a modulation driving and receiving system for glass is an additional advantage above and beyond the avoidance of cross talk, which has been discussed previously.

## BRIEF DESCRIPTION OF THE DRAWINGS

For a more complete understanding of the present invention and for further advantages thereof, reference may now be had to the following Detailed Description taken in conjunction with the accompanying drawings.

Referring to the drawings:

FIGURE 1 illustrates a cross-section of a thin cylindrical shell vibrating in a mode that includes four nodes and antinodes;

FIGURE 2 is a plot of energy distribution along the lengthwise axis of a cylindrical shell for banded resonance in accordance with the present invention;

FIGURE 3 is a plot of energy distribution for mechanical vibration of a cylindrical shell illustrating ring-shaped nodes;

FIGURE 4 illustrates a system for nonintrusive pressure measurement within a cylindrical shell;

FIGURE 5A is a side view of an acoustic electromagnetic driver transducer for inducing acoustic vibrations into a pipe for pressure measurement in accordance with the present invention;

FIGURE 5B is a front view of the acoustic electromagnetic driver transducer shown in FIGURE 5A;

FIGURE 5C is a top view of the transducer shown in FIGURE 5A;

FIGURE 6A is a front view of an acoustic receiver for monitoring stress changes within a pipe for measuring pressure in accordance with the invention;

FIGURE 6B is a side view of an acoustic receiver shown in FIGURE 6A;

FIGURE 7 is a schematic diagram of a power amplifier as used in FIGURE 4;

FIGURE 8 is a block diagram for processing the frequency of vibration of the cylindrical shell of FIGURE 4 to indicate the measurement of pressure within the cylindrical shell; and

FIGURE 8A is a block diagram of a system for data processing the information derived from a mechanically oscillating pipe to determine the pressure corresponding with the mechanical oscillation in the case in which the range of pressure is not small.

0088362

## DETAILED DESCRIPTION OF THE INVENTION

The arrangement by which the confinement of elastic energy in a zone with exponential falloff is achieved has been extensively studied and reported in United States Patent 3,916,699 wherein it is identified as a "banded vibration". In this United States patent there is described banded vibration application to a pipeline flaw finding with detailed specifications established to define the concept of banded vibration. In accordance with the present invention the confinement of a zone of vibrational energy is established in a cylindrical shell by slightly thinning the wall thereof in the zone where it is desired to concentrate the vibrational energy. A very minute degree of thinning, of a magnitude of a fraction of a percent of total wall thickness, suffices to produce sufficient influence to concentrate the energy in the vicinity of the thinning. It has been found desirable that the change of thickness of the wall of the cylindrical shell in the center of the zone increases gradually to the normal thickness of the cylindrical shell proceeding away from the zone. Because the amount of thinning need be only a minute degree, such thinning may be achieved, for example, by sandpapering the outer surface of the cylindrical shell.

The effect of the thinning as described above, is to produce a more satisfactorily uniform and locally concentrated banded resonance. It has been found that banded resonances are a general property of cylindrical shells, and exist with energy localized as described in accord with previous banded resonance discoveries regardless of whether thinning is performed. It is, therefore, noted that the thinning process is a convenience, to improve the character of the banded resonance, and is in no sense indispensible. Thinning is mentioned here for the reason that because of careful exterior finish, or because of chemical passivation of a pipe surface against erosion, and for other reasons, there frequently arise occasions in which the thinning by sandpapering, or otherwise, would be inconvenient. For such a case, a different technique of localizing the resonant band may be used if improvement or better localization of the resonant band is desired. The substitute for thinning, which represents a further improvement, is achieved by attaching small masses to the pipe, and securing them, as for example by epoxy resin or by polyurethane cement as the case may be. In the case of steel pipes, it is convenient to attach very small magnets, the magnets perferably being of the modern extremely powerful magnetic alloy which includes rare earth metal as a constituent. The addition of the masses around a perimeter of the pipe, preferably evenly spaced, causes the frequency of the vibration in the neighborhood of the pipe where the magnets are attached to be slightly lowered, an effect which concentrates the vibration band conveniently.

With reference to FIGURE 1, a cross section of a thin cylindrical shell 10 is schematically illustrated in which four nodes and antinodes are set up by inducing a vibration into a longitudinal section of the shell. This induced resonant vibration sets up oscillations between two limiting shapes. This vibrational pattern is set up along a band extending circumferentially around the cylindrical shell 10 and extending some finite distance along the longitudinal axis thereof.

FIGURE 2 illustrates this distribution of energy along the axis of the cylndrical shell with the ordinate axis representing the energy of vibration (at some moment of time) per centimeter of length of the cylindrical shell 10 as observed in slices one centimeter long parallel to the shell axis. The abscissa increases in the direction of the indicated X coordinate. Values lying on the curve diminish in a monotone manner with increase in the X direction to the extreme right, and to the left, in the figure.

The banded resonance energy distribution function of FIGURE 2 is not monotone at the maximum shown in the Figure.

With reference to FIGURE 3, the vibrational energy stored in FIGURE 1 is shown distributed along the longitudinal axis of the shell as induced by a mechanical vibration thereof. FIGURE 3 illustrates the distinction of the banded resonance vibration as utilized in the present invention for nonintrusive measuring of pressure over the vibrational movements illustrated and described in the prior art. FIGURE 3 utilizes the same coordinate system as shown in FIGURE 2 and has a maximum amplitude where the curve crosses the Y axis. The energy distribution as established in a cylindrical shell in accordance with the prior art diminishes per unit of length and drops abruptly to zero at the coordinates A and A' creating a pair of ring-shaped nodes and thereafter increases to a maximum at the coordinates B and B'. The energy per unit of length then again diminishes to a minimum at the coordinates C and C'. It will be understood that in a long cylindrical shell the repetition of the increase and decrease of the amplitude per unit of length persists and is cyclical with respect to the length coordinate. Two more nodes, such as illustrated in FIGURE 1, are found in this cylindrical shell at the point B and B'. By contrast, the vibrational pattern illustrated in FIGURES 1 and 2 exhibits a unique monotone character away from a single maximum. FIGURE 3 is presented to clearly point out this difference. FIGURE 3 does not picture a banded resonance.

It is the establishment of the energy vibrational pattern as illustrated in FIGURES 1 and 2 in a cylindrical shell that enables the measurement of pressure by nonintrusive method and apparatus.

Referring to FIGURE 4, there is shown apparatus for nonintrusive measurement of pressure within the cylindrical shell 10. FIGURE 4 serves also to illustrate the method of making such measurements. An oscillator 16 generates a signal frequency input to a modulator 48. Another electrical signal of a different frequency is delivered to the modulator 48 from the output of the amplifier 18. The output of the modulator (containing the difference frequency corresponding with the difference between the frequency of the output of the amplifier 18 and the frequency of the oscillator 16) is delivered to the frequency counter 32. An electromagnetic driver 21, having poles at 22a and 22b, is surrounded by winding 20. The poles 22a and 22b are permanently magnetically polarized by virtue of choosing the material of the driver 21 of a permanent magnetic material and previously magnetizing it. Changes in the strength of the poles 22a and 22b, caused by oscillations in the output delivering electrical energy from the amplifier 18 through the coil 20, act upon the thinned zone of the cylindrical shell 10 and, exerting mechanical forces upon it through space, cause it to oscillate. The oscillations which occur influence the magnetic fields emanating from the poles in an exactly similar electromagnetic receiver 24, which is also permanently magnetized.

The movement corresponding with the mechanical oscillation of the shell 10 in the thinned zone adjacent to the receiver 24 varies the magnetic field linking the coil 26, inducing oscillatory electromotive forces in the coil 26. The terminals of the coil 26 deliver oscillatory electrical potentials to an alternating current amplifier 28, which is connected through a filter 30 adapted to exclude frequencies distant from the desired mode of oscillatory frequency of the cylindrical shell 10. The output of the filter 30 is connected to the amplifier 18, the amplifier having sufficient gain to maintain a delivery of energy to the vibrating shell through the coil 20 and the driver 21, sufficient to sustain the mechanical oscillation of the shell. The oscillator 16 is chosen to oscillate at the base frequency corresponding with zero pressure inside the shell. The modulator 48 produces the difference tone, subtracting from the frequency of the mechanical oscillator (the frequency in the loop involving the driver 21 and receiver 24, the two amplifiers 18 and 28, and the filter 30, acting through the pipe), from the frequency of the oscillator 16. Whatever the pressure inside the shell 10, the above described loop always oscillates at the properly related frequency $F_p$.

Referring to the electromagnetic driver transducer having the coil 20 and the poles 22a and 22b, it has been found satisfactory, and equivalent to energize the pipe acoustically, substituting a different entity connected to the output wires from the amplifier 18. Devices which have been found satisfactory are commercially available loudspeakers, including any of the commonly available forms such as cone type speakers, horn speakers, and earphones. When it is particularly desired to energize the pipe at a very localized region, a cone speaker may be mounted at the large end of an exponential horn, with a small end open and adjacent to the vicinity of the pipe where it is desired to deliver the acoustical energy. These various acoustical devices which may take the place of the transducer comprised of the winding 20, and the poles 22a and 22b are not pictured for the reason that they work in an equivalent manner, and are generally familiar to all those skilled in acoustic art.

It will be noted in the drawing of FIGURE 4 that the permanent magnet poles are unequal, one having a greater area than the other. There is a particular reason why this is necessary. It lies in the fact that equal poles, polarized as described heretofore, do not exert net mechanical effects in driving the steel pipe, nor receive electrical signals from the movement of the steel pipe in a manner that is sensitive to the movement. The defect of a permanent magnet system with poles of an equal area is due to the fact that the traction (pressure) of a magnetic field is proportional to the square of the intensity of the magnetic field. It can be shown algebraically that, with poles symmetrical and equal, to a first approximation a small increment of the magnetic field of the permanent magnet caused by the driving coil has the effect that one pole diminishes a little in its magnetic intensity, whereas the other one increases by a small and equal amount. The decrease of traction (pressure) at one pole is exactly balanced by an increase in traction or pressure at the other pole. No net change of traction of the magnet occurs. By using a pole of larger area at one end, the principal traction effect due to the permanent magnet is concentrated at the end where the slender pole is. Changes in its strength are more effective, exerting a larger difference of pressure on the surface of the pipe, and its effect not nullified by the unsymmetrically larger pole at the other end. The unsymmetry in one form or another is absolutely necessary for an efficient permanent magnet electromagnetic drive.

The operator will realize that there are arrows at various places on the electric wires which appear in the diagram of the wires in FIGURE 4. These arrows are not oriented in the direction of flow of electrical current, and indeed they cannot be, for the reason that it is alternating current that is involved. The arrows on the wires designate the direction of the flow of energy in the electrical system of which they comprise a part.

Through the action of the modulator 48, the frequency counter receives a signal having a frequency $F_p-F_o$ proportional to the pressure within a limited range from zero pressure upward. A formula for making pressure measurements on a pipe anywhere in a system relates the frequency of a resonant oscillation of a banded resonance having a cross section within the band of the resonance (the longitudinal zone within which the principal part of the energy of vibration exists) corresponding with four equally spaced nodes, and four equally spaced antinodes. A formula expressing a relationship between $F_p$ and $F_o$ and a constant C relating to the pipe (and to the liquid therein, if any) is $F_p=F_o(1 + CP)^{1/2}$:

where:

$F_0$ is the resonant frequency of a banded resonance in the pipe when it has pressure inside it precisely equal to the pressure outside it (zero pressure difference inside to outside),

$F_p$ is the frequency of an exactly similar resonance excited on the pipe when it is subjected to an internal pressure greater than the external pressure by P units of pressure;

P is the corresponding number of units of pressure applied to the inside of the pipe, exceeding the pressure outside of the pipe; and

C is a constant related to the mechanical properties of the pipe at a given temperature.

It is seen that the formula is universal for all pipes
and all pressures, provided that the appropriate value of
the constant C is known in each case. C is generally small
for very thick pipes and larger for thin-walled pipes. C
also depends upon the mechanical characteristics of the
pipe. Step one in the procedure of measuring pressure in
an unknown pipe requires knowledge of the constant C for
the particular pipe. A ready method of determination of
the constant C includes measuring the resonant frequency of
the pipe when it is known that it has no internal pressure
and later measuring it at a particular pressure, independently determinable in some acceptable, accurate manner.
Ways of delivering, for calibrational purposes, a known
pressure to a pipe are well known in the art.

If the delivery of a known pressure is not convenient,
there are other methods to ascertain the value of the
constant C. The constant is calculable by the elasticity
theory if material and wall thickness are accurately
specified in a pipe as well as the kind of material.
Outside diameter of any pipe is readily ascertained by
direct measurement. If the pipe is of a common variety of
steel, very often the moduli are satisfactorily determined
by performing a Brinell hardness test on the pipe wall.
Magnetization tests also may be employed. Saturation
magnetization of all the common SAE grades of steel does
not vary noticeably from 19,000 lines per square centimeter. It is not a difficult thing to determine the
saturated magnetic flux of a steel pipe. The instructive
datum is the number of lines required to produce saturation
longitudinally. This determination yields the value of the
cross sectional area of the steel composing the pipe in a section perpendicular to the axis of it. With such information, and with the outside diameter, and with mechanical characteristics determined by Brinel testing and/or torsional stiffness measurement, the value of C may be computed for the equation which relates resonant frequency to an internal pressure.

Referring again to the above formula $F_p = F_o(1 + CP)^{1/2}$, it is apparent that the right hand term containing the parenthesis raised to the 1/2 power may be expanded according to the binomial theorem for expansions in power series. If this expansion is performed, and all the terms of the expansion except the first two are neglected, there is derived a formula $P = (F_p - F_o)K$. The approximation of omitting all the terms of the binomial expansion after the first two is a computation which is correct within a small range of pressure from zero difference of pressure upward (excess of pressure inside this shell over the pressure outside this shell).

The electronic circuit of FIGURE 4 performs the computation set out in the formula $P = (F_p - F_o)K$ as it relates to the use of the system for measuring pressure in a limited range. The output of the oscillator 16 as applied to the modulator 48 functions in combination with the output signal from the amplifier 18 to produce a difference frequency. Assuming that the output from the amplifier 18 is carrying the data, the function performed at the modulator is, arithmetically speaking, substraction, and it represents completion of the step shown in the parenthesis, $F_p - F_o$. There is a step implicit in the operation of the counter 32 of FIGURE 4 which has the effect of multiplication of the parenthetical quantity by a constant, as represented in the formula. This step is achieved by the choice of the time counting interval within which the impulses are totalized at each counting process of the counter 32. By varying the time counting interval, the constant K may be made to equal any value that is desired.

If the required time counting interval is inconveniently long, this may be overcome by inserting between the modulator 48 and the counter 32 a frequency multiplying device, as for example, an overloaded transformer. An overloaded transformer produces a frequency three times higher than the applied frequency. The three times higher frequency may be isolated through the use of overloaded transformers connected in pairs adapted to balance the fundamental frequency so that only the third harmonic is passed. Such an arrangement, familiar in the art, changes the time required to achieve a datum at a given multiplying constant, diminishing the required time by a factor of three.

In effect, between the leadwire extending from the output of the amplifier 18, and the counter 32, there is implicit in FIGURE 4 a computer operation, an operation generally similar to those frequently performed in digital computing machinery. Because of the simplicity of the computation being performed, it was convenient to illustrate the specific details of the components involved in the computation. In the case of more complicated computations and/or corrections in the data, it will be preferred to use standard and convenient digital computation machinery, since these processes are not so simple as the ones already illustrated. Precisely the same remarks as have been applied here in the discussion of FIGURE 4 also apply to FIGURE 4A.

Referring to FIGURE 4A, there is shown an alternate embodiment of the invention which differs from the system shown in FIGURE 4 by the replacement of the electromagnetic transducers with transducers which first produce wave motion in the air adjacent to the cylindrical shell, causing the air to react upon the cylindrical shell and cause it to vibrate. Further, the motion of the cylindrical shell is detected by receiving and electrically transmitting the effect of air waves resulting from air set in motion by the vibration of the nearby surface of the cylindrical shell. Other than for a change in the driving and receiving transducers the systems of FIGURES 4 and 4A are similar. The same reference numbers are therefor used with the addition of primed numbers in FIGURE 4A.

In the practice of the invention in accord with FIGURE 4A, the driver element 21' is typically a high-frequency loudspeaker of the category referred to in sound processing equipment by the term "tweeter". In addition, if desired, there may be employed means to concentrate the air waves at a very narrow locality of the pipe. Such means are familiar in the art, and are extensively treated in textbooks on acoustics under the title "Exponential Horns".

In FIGURE 4A, there is shown the driving of the cylindrical shell at only one locality on its perimeter. It is convenient at times to situate a plurality of drivers 21', or for that matter of plurality of receiving elements 24'. When this is done, the distribution in space of the driving and receiving elements is chosen to favor a particular vibrational mode of the cylindrical shell. Drivers 21', for example, will be spaced out adjacent to regions of maximum motion occuring in the chosen vibration mode. Receivers 24', if there be a plurality of them, are likewise spaced and situated where, in the particular vibration mode, the movement of the pipe favors, in each instance, the delivery of a maximum amount of energy. Briefly, receivers or vibration-producing elements are spaced adjacent to antinodes of the vibration mode which is desired.

0088362

There may be occasions when it is convenient to drive the pipe 10' electromagnetically and detect the motion by means of air waves, or perhaps to drive it by air waves and detect the motion electromagnetically. All such variations as may prove convenient lie within the scope of the herein claimed invention, and may be chosen or avoided according to the requirements encountered in each case in which this invention will be applied.

As has been stated above, the air wave producing and receiving members may be tweeter loudspeakers. There are familiar in the art of acoustical engineering numerous devices which may sometimes be found equally desirable. These include, but are not limited to, the thermophone, piezoelectric transducers, capacitance microphones, electric arc transducers, and other devices that appear in the literature which create acoustical waves in air, or are adapted to observe them.

In connection with the capacitance microphone, this device is a reversible transducer, adapted not only to receive air wave signals, but also, in fact, capable of producing them. The capacitance microphone, as it is physically designed, also has an additional and a very interesting feature in that the energizing electric field which usually is a direct current or steady state field may be substituted by a field induced by an alternating electric potential source. When this substitution is made, air waves that are being received by the microphone no longer generate an electric wave at the frequency of the incoming compressional wave in the air. Instead, the electric output of a capacitance microphone which is energized in a cyclical manner is a signal which contains the summation and difference frequencies of the incoming air wave on the one hand, and the frequency of the oscillating electromotive force on the other hand. Because of the fact that the oscillating electromotive force will constitute in general a very large signal, interfering with function of the capacitance microphone as it is ordinarily used, such microphones which are to be employed as modulators may be used in pairs, delivering opposed polarities of the oscillating electromotive force equally to each member of the pair, and connecting their outputs to cancel the otherwise overriding AC wave due to the AC driving. Where it is desired to use only one capacitance microphone, a condenser having the same electric capacity as the microphone may be substituted for the second microphone as a dummy member of a pair of the above cancellation technique.

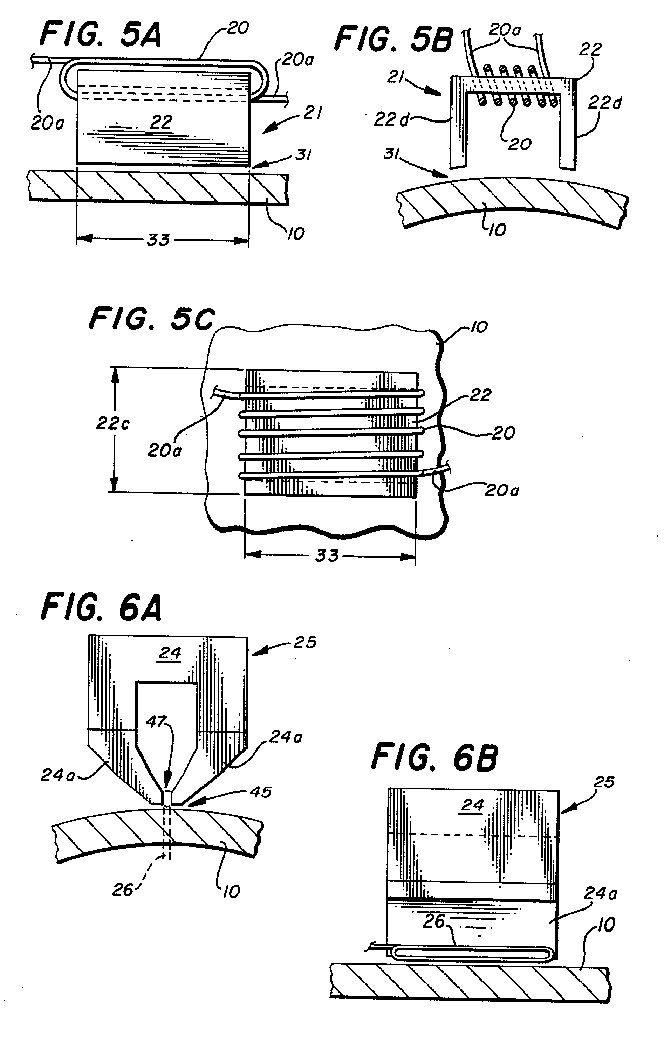

Referring now to FIGURES 5A, 5B and 5C, there is shown front, side and top views, respectively, of the transducer 21. The transducer shown is of the ferromagnetic, non-contacting, magnetically coupled type but many other types of drivers could be used in the invention. The transducers 21 comprises a magnetic exciter including the permanent magnet 22 comprised of standard high frequency ferromagnetic material having the coil 20 of heavy gauge copper conductor, the end leads 20a of which extend to the driving power amplifier 18. The pole pieces of the transducer 21 are separated from the cylindrical shell 10 by a spaced distance, denoted by the character 31, and extend for a short direction along the longitudinal axis of the cylindrical shell 10. The length of the driver core in the direction of the pipe axis is denoted by character 33, as well as the spacing of the driver legs 22c, and the thickness of the driver legs 22d, and the number of driver legs are particularly related to the efficiency of mode conversion. Both the width and shape of the banded resonance, as well as the family and wavelength of the vibrations are partially determined by these dimensions.

In one embodiment designed for testing a steel pipe section having an 8-inch inside diameter and wall thickness approximately one-fourth inch at a mechanical vibration frequency on the order of 200 KHz, a core width of approximately 1 inch and a core length of approximately 2 inches and a leg thickness of about one-fourth inch produces a banded vibration having an extent of approximately 6-10 inches along the longitudinal axis of the pipe centered at the location of the driver center. In other embodiments of the invention, these dimensions may be altered and the core may be other than rectangular.

FIGURES 6A and 6B illustrate a front and side view, respectively, of one embodiment of the receiving transducer 25 which has been found effective in the present invention. The transducer 25 comprises a ferromagnetic pole tip 24a which is pear-shaped to carry the magnetic flux of the permanent magnet 24. The pole tip 24a of the transducer 25 carries flux in a low reluctance path from the region of the transducer pipe wall gap (denoted by character 45) and the pole-to-pole gap (denoted by character 47). The only somewhat critical dimension in the transducer is that of the pole-to-pole gap 47 which is related to the spatial resolution of the transducer. For frequencies up to 250 KHz in steel pipe, a pole-to-pole gap of about one-sixteenth inch is satisfactory and the distance between the tops of the poles and the wall of the cylindrical shell 10 may be on the order of one thirty-second inch. The transducer 25 includes a pickup coil 26 comprising approximately 50 turns of No. 36 copper insulated wire for operation at frequencies up to about 250 KHz. The coil 26 can be placed at other points in the magnetic path formed by the magnet 24, the pole tops 24a and the cylindrical shell 10. For example, the pickup coil 26 may be placed in a gap created between the magnet 24 and the poles 24a or wound about the poles or the magnet itself. The leads from the transducer 25 extend to the input of an amplifier.

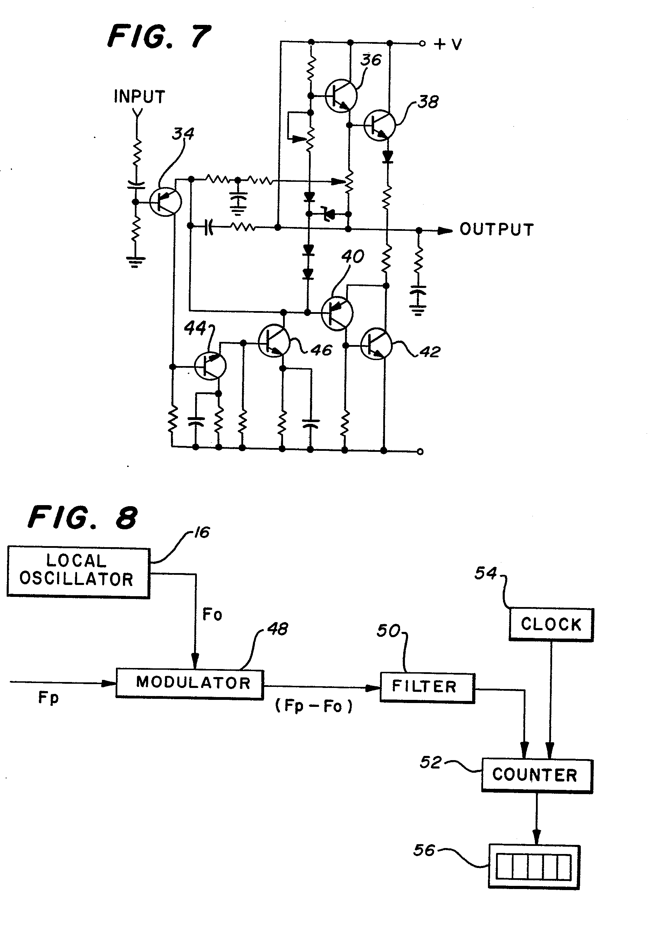

Referring to FIGURE 7, there is shown one example of a power amplifier 18 for use in driving the input transducer 21 comprising the coil 20 and permanent magnet 22. The output of this amplifier varies plus or minus a null voltage as established by the power supply connected to the terminal +V and -V. Basically the power amplifier of FIGURE 7 consists of an input transistor 34 driving emitter follower output stages consisting of transistors 36 and 38 as one output stage and transistors 40 and 42 as a second output stage. The output of the transistor 34 is coupled to the output stages through intermediate amplification stages consisting of transistors 44 and 46. The amplifier of FIGURE 7 is of a conventional design and is included here as one example of circuitry for the amplifiers 18 and 26.

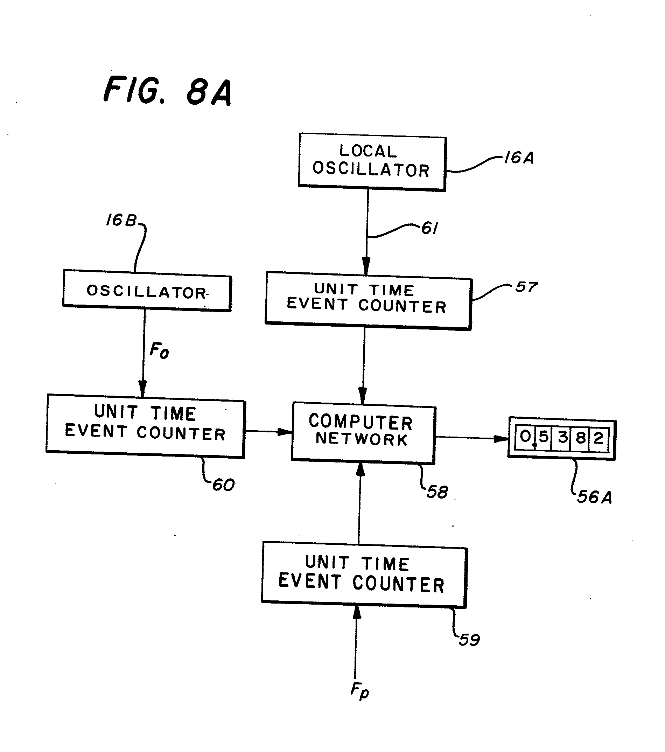

Referring to FIGURE 8, there is shown details of a system for processing the output frequency of the filter 30 into pressure in suitable units. The frequency of the crystal controlled oscillator 16 is stabilized at $F_0$ for the banded resonance being used in the measurement.

An output frequency $F_p$ of the filter 30 is applied to a modulator 48 which produces a difference tone as given by the expression $(F_p - F_0)$. The output of the modulator 48 is applied to a filter 50 designed to suppress noise or any summation frequency output from the modulator 48. The difference frequency passes through the filter 50 and is applied to one input of a counter 52 which is gated in accordance with the output of a system clock 54 to a display and/or control network 56. By properly choosing the time gate, the operator exercises control over the constant K in the limited range formula set out in the equation $P = (F_p - F_0)K$. Through the appropriate choice of this time gate and corresponding control of the constant K, the operator may enable the system to report limited range pressure variations as previously described in connection with FIGURE 4, and with the added feature that through varying the proportionality constant at will, the pressure units may be made to correspond with any desired unit of pressure whatsoever, such as, for example, pounds per square inch, kilograms per square centimeter, kilotons per square furlong, dynes per square millimeter, or whatever unit may be desired. As previously discussed, the banded resonance frequency as monitored by the output transducer 25 is measured in a digital format generating a pulse train to the display and/or control network 56 where the rate of the pulse train varies with pressure within the cylindrical shell 10 in accordance with the formula (1).

In operation of the method of the present invention, the frequency of the crystal controlled oscillator 16 is chosen to correspond with the desired mode of banded resonance within the cylindrical shell 10. A corresponding frequency of banded resonance as actually excited is monitored at the output of the filter 30 which resonant frequency varies with the stress established in the thin wall section of the cylindrical shell 10 in accordance with pressure within the section. This output of the filter 30 is fed back to the amplifier 18 to establish the feedback oscillator at the resonant frequency of the vibrational energy.

The output frequency of the filter 30 is applied as one input to a modulator 48 that receives a second input from the oscillator 16. An output of the modulator 48 is a difference frequency varying in accordance with the expression $(F_p - F_0)$. This difference frequency is applied to one input of a gated counter 52 that produces an events per unit time signal connected to a counter and/or control network 56.

FIGURE 8 more clearly illustrates the simple computational step that has been described in connection with FIGURE 4A. In the case of this FIGURE, we may again consider that between the signal $F_p$ and the display of the data by the counter 56, there is a computational process. The nature of the computational process is, in fact, diagrammatically indicated, showing how the difference is produced at the modulator. The choice of the clock interval defined by the clock 54 inserts the required factor, in the same manner as has been described with reference to FIGURE 4 and FIGURE 4A. Further, the signal from the filter 50 may be amplified and frequency multiplied if such steps prove convenient or desirable. All the FIGURES which have been referred to in connection with computational processes are adapted to perform the computation of the limited range formula: $P = (F_p - F_o)K$.

Since the system of the present invention for pressure measurement may be operated without the restriction of the limited range assumptions, there may also be implemented a formula and computation process which is symbolized by the difference $F_p^2 - F_o^2$ multipled by the constant $F_o^{-2}C^{-1}$. This series of operations, though not terribly complex, is somewhat more complicated than the operations required to read out the pressure from the limited range formula. The steps of computation are squaring and subtracting the squares of two quantities, each quantity being available in digital form, and subsequently multiplying the computed difference by a constant. The constant in question is $F_o^{-2}C^{-1}$.

FIGURE 8A shows diagrammatically the inputs of information, and includes a computer network 58 for performing the computational steps which are required. In the computational procedure, there are, in fact, three inputs: first, the input of the frequency $F_p$ which may be converted to a digital format applied to the computer by timing $F_p$ over a unit time interval, and delivering the digital count obtained over the unit time interval, and second, the $F_o$ input. The third input comes from an oscillator 16A that has a frequency numerically equal to the term $F_o^{-2}C^{-1}$. Such an oscillator, having its frequency counted over a unit time interval, delivers digital information which, being processed by the computer network 58, yields the computation shown in the formula, $P = (F_p^2 - F_o^2)F_o^{-2}C^{-1}$, which digital output is displayed on the counter 56A.

FIGURE 8A specifically illustrates the details of the computational process related to the general formula for calculating pressure when the frequency of the oscillation of the pipe is known. Shown in FIGURE 8A is a local oscillator 16A, the oscillator being chosen differently from the oscillator in the preceding FIGURE 8 in the sense that the frequency of oscillation is not $F_o$ but rather is the quantity $F_o^{-2}C^{-1}$. The output of the oscillator 16A is converted to a numerical quantity on a unit time event counter 57 which totals the number of oscillations of the oscillator that occur in a unit of time. The output of the counter 57 delivers the number resulting from this count to the computer network 58. The computer network 58 also receives an input derived from a standard oscillator 16B which, similar to the oscillator 16 of FIGURE 8, produces the frequency $F_o$. The frequency $F_o$ is converted to a numerical quantity for input into the computer network 58 through the unit time event counter 60. The input $F_p$ contains frequency information which is converted to a digital value for input to the computer network 58 by means of a unit time event counter 59.

The computational procedure performed in the computer network 58 comprises the squaring of the digital value

proportional to $F_p$ and the digital value proportional to $F_o$, the subtraction of the squares, and the multiplication of the difference of these squares by the input value derived indirectly from the oscillator 16A. The squaring, subtraction and multiplication having been completed, the numerical readout is delivered to the counter 56A, where the pressure computed according to the formula $P = (F_p^2 - F_o^2)F_o^{-2}C^{-1}$ is displayed.

Referring further to FIGURE 8A, the operator will note that items 57, 59 and 60 are labeled in the FIGURE "unit time event counter" in each case. As is well known, a unit time event counter delivers a digital output, which is always a number of impulses which fell within the time interval during which the count was taken. Depending on the exact time of beginning and ending of a counting time interval, the number of events reported will vary by one unit, even though the oscillator sources are absolutely constant. The random error, plus or minus 1/2 unit, becomes unimportant if the frequency being counted is large enough. If the maximum permissible error is plus or minus a part in 100,000, the oscillator 16B is made to deliver a frequency in the hundreds of thousands. A frequency multiplying circuit familiar in the carrier frequency and signal transmission art may be used to increase this input by a known factor. The frequency $F_p$ also is multiplied by an appropriate constant to assure that the input to the unit time event counter is in the hundreds of thousands. Similarly, the frequency of the local oscillator 16A may be chosen 1,000 or 10,000 times greater than the quantity represented by the constant $F_o^{-2}C^{-1}$. To enable the most prompt counting, time is taken on all the unit time event counters by the use of the same clock, starting the counts at identical time and ending them at identical time. The calculator takes out all the multiplier factors which have been used, and delivers a freshly computed reading according to the formula $P = (F_p{}^2 - F_o{}^2)F_o{}^{-2}C^{-1}$ immediately after the end of each clock interval of the timers.

Having described the invention in connection with a preferred embodiment thereof, it is understood that further modifications may now suggest themselves to those skilled in the art and it is intended to cover such modifications as well within the scope of the appended claims.

CLAIMS

1. Apparatus for nonintrusive pressure measurement of the difference between the external and internal pressure of a pipe, comprising: means for producing a banded vibration resonance within said pipe; means for determining the resonant frequency of the banded vibration in the pipe; and means responsive to the resonant frequency of the banded vibration to produce an indication of pressure within the pipe.

2. Apparatus for nonintrusive pressure measurement as set forth in Claim 1 wherein the means responsive to the resonant frequency includes means responsive to the difference between the frequency signal of the banded vibration when the pressure within the pipe is the same as the external pipe pressure and the resonant frequency of the banded vibration when the internal pipe pressure varies from the external pipe pressure, said means producing the indication of pressure within the pipe.

3. Apparatus for nonintrusive pressure measurement as set forth in Claim 1 wherein said means responsive to the resonant frequency includes: an oscillator; means for subtracting the square of the output frequency of said oscillator from the square of the resonant frequency of the banded vibration to produce a difference signal; and means for dividing said difference signal by a constant to produce the indication of pressure within the pipe.

4.    Apparatus for nonintrusive pressure measurement as set forth in Claim 1 wherein said means responsive to the resonant frequency includes:

an oscillator;

means for subtracting the square of the output frequency of said oscillator from the square of the resonant frequency of the banded vibration to produce a difference signal; and

means for multiplying said difference signal by a constant to produce the indication of pressure within the pipe.

5.    Apparatus for nonintrusive pressure measurement as set forth in Claim 1 wherein said means responsive to the resonant frequency of the banded vibration includes means for generating a signal varying in accordance with the formula:

$$F_p = F_0 (1 + CP)^{1/2},$$

where:

$F_p$ = pressure within the pipe,

$C$ = a constant, and

$F_0$ = the resonant frequency of the banded vibration.

6.    Apparatus for nonintrusive measuring of pressure within a body having at least one acoustic path, where the body has length normal to the path, comprising:

energizing means mounted adjacent the body and energized to establish banded vibration resonance within the body;

detector means mounted adjacent the body for detecting a vibration wave established by said energizing means and generating an output signal varying with pressure within the body; and

means responsive to the output signal to produce a measurement of the pressure within the body.

7.    Apparatus for nonintrusive measuring of pressure as set forth in Claim 6 wherein said means responsive to the output signal includes means for generating an output ($F_p$) varying with stress in accordance with the formula:

$$F_p = F_0(1 + CP)^{1/2},$$

where:

P = pressure within the body,

C = a constant, and

$F_0$ = the frequency of the energizing means.

8.    Apparatus for nonintrusive measuring of pressure as set forth in Claim 6 wherein said energizing means is a permanent magnet solenoid.

9.    Apparatus for nonintrusive measuring of pressure as set forth in Claim 6 wherein said means responsive to the output signal includes a time gated counter generating a pulse train output having a pulse rate varying with pressure within the body.

10.   Apparatus for nonintrusive measuring of pressure within a body having at least one acoustic path, where the body has length normal to the path, comprising:

energizing means mounted adjacent the body to establish acoustic vibrations within the body along the acoustic path and evanescent vibrations in a direction normal to said path;

detector means mounted adjacent the body for detecting the vibration wave established by said energizing means and generating an output signal varying with stress change in the body due to pressure changes within the body;

means for interconnecting the output signal of said detector means to said energizing means in a feedback loop; and

means responsive to the output signal to produce a measurement of the pressure within the body.

11.   Apparatus for nonintrusive measuring of pressure as set forth in Claim 10 wherein the frequency of the energizing source is controlled to establish a four node vibration along the path.

12.   Apparatus for nonintrusive measuring of pressure as set forth in Claim 11 wherein said means responsive to the output signal includes a time gated counter generating a pulse train output having a pulse rate varying with the pressure within the body.

13.    Apparatus for nonintrusive measuring of pressure as set forth in Claim 10 wherein said means responsive to the output signal includes means for generating an output ($F_p$) varying with stress in the body in accordance with the formula:

$$F_p = F_0 (1 + CP)^{1/2},$$

where:

P = pressure within the body,

C = a constant, and

$F_0$ = the frequency of the energizing means.

0088362

1 / 4

**FIG. 1**

**FIG. 2**

**FIG. 3**

**FIG. 4**

OSCILLATOR → MODULATOR → 0.5382

AMP

AMP

FILTER

**FIG. 4A**

OSCILLATOR → MODULATOR → 0.5382

AMP

AMP

FILTER

## FIG. 5A

## FIG. 5B

## FIG. 5C

## FIG. 6A

## FIG. 6B

FIG. 7

0088362

3/4

INPUT

+V

34

36

38

OUTPUT

40

44

46

42

FIG. 8

LOCAL OSCILLATOR  16

CLOCK  54

Fo

Fp

MODULATOR  48

(Fp - Fo)

FILTER  50

COUNTER  52

56

## FIG. 8A

European Patent
Office

**EUROPEAN SEARCH REPORT**

0088362

Application number

EP 83 10 2062

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,A | DE-A-3 124 340 (N. DENSOKU LTD.) * Claim 2 * | | G 01 L 11/00 |
| A | DE-A-2 552 315 (E.D. KRYLOVA et al.) * Claims 1-4, 7 * | 1-4 | |
| A | DE-A-2 620 368 (WESTINGHOUSE ELECTRIC CORP.) * Claims 1, 7 * & US - A - 4 009 616 | 1 | |
| A | IBM TECHNICAL DISCLOSURE BULLETIN, Vol. 20, no. 8, Januar 1978, New York D. DEVINE et al. "Noninvasive pressure measurement" pages 3330-3331 | | |

TECHNICAL FIELDS
SEARCHED (Int. Cl. 3)

G 01 L 11/00
G 01 H 13/00

The present search report has been drawn up for all claims

| Place of search BERLIN | Date of completion of the search 02-06-1983 | Examiner KOEHN G |
|---|---|---|